# EUROPÄISCHE PATENTSCHRIFT

(11) **EP 1 474 910 B1**
(45) Veröffentlichungstag und Bekanntmachung des Hinweises auf die Patenterteilung: **20.07.2016**
(21) Anmeldenummer: 03737234.9
(22) Anmeldetag: 10.01.2003
(51) Int. Cl.: H04M 3/38, H04M 11/04, H04M 3/533

(54) **ORGANISATION EINES TELEKOMMUNIKATIONSNETZES IN AUSNAHMEFÄLLEN**
ORGANIZATION OF A TELECOMMUNICATION NETWORK IN EXCEPTIONAL CASES
FONCTIONNEMENT D'UN RESEAU DE TELECOMMUNICATION DANS DES SITUATIONS EXCEPTIONNELLES

(30) Priorität: 02.02.2002 DE 10204300
(43) Veröffentlichungstag der Anmeldung: 10.11.2004
(73) Patentinhaber: Deutsche Telekom AG, 53113 Bonn (DE)
(72) Erfinder: TRINKEL, Marian, 52372 Kreuzau OT Untermaubach (DE); BINDEL, Frank, 53639 Königswinter (DE)
(74) Vertreter: Cohausz Hannig Borkowski Wißgott
(86) Internationale Anmeldenummer: PCT/DE2003/000050
(87) Internationale Veröffentlichungsnummer: WO 2003/067862

(56) Entgegenhaltungen:
- EP-A- 1 032 236
- WO-A-00/18096
- WO-A-02/058366
- US-A- 5 844 974

## Beschreibung

Die vorliegende Erfindung betrifft ein Verfahren zum Betrieb eines Kommunikationsnetzes, wie eines Telephonnetzes oder des Internets, im Fall einer zeitweisen starken Belastung (Ausnahmefall), insbesondere im Fall einer zumindest einen Teil der Bevölkerung betreffenden Gefahrensituation, wobei das Netz über eine Vielzahl von Anschlüssen verfügt, an die jeweils Endgeräte, beispielsweise Telephone, Computer oder Faxgeräte, anschließbar sind, wobei die Anschlüsse jeweils über individuelle Netzkennungen anwählbar sind und wobei ein zentraler Computer (Server) zur Organisation der Verbindungen in das Netz eingebunden ist.

Bis vor kurzem wurde die Bevölkerung bei derartigen Gefahrensituationen, wie sie beispielsweise von Großbränden ausgehen, über Sirenen oder Lautsprecher über das Geschehen informiert. Diese Möglichkeit der Warnung durch flächendeckend installierte Sirenen besteht heute nicht mehr, da diese Signalkörper nach und nach an Bedeutung verloren haben und von den Kommunen zur Einsparung von Wartungskosten abgebaut wurden. Letztendlich waren Sirenen Relikte aus Kriegszeiten und hatten nur noch in ländlichen Gegenden Bedeutung, wo Einsatzkräfte der Feuerwehr schnelle zusammengerufen werden mußten. Schließlich verlernte die Bevölkerung auch die Bedeutung der Schallsignale.

Die Information der Bevölkerung durch stationär installierte Lautsprecher war schon länger unüblich geworden und die Verbreitung von Nachrichten über bewegliche Lautsprecherwagen ist heute kaum noch gebräuchlich. Letztendlich sterben die Systeme zur Information der Bevölkerung wegen der Dominanz der elektronischen Medien, wie Radio, Fernseher oder Computer, langsam aus.

Nachteilig an dem Verlust der bekannten Systeme ist jedoch, daß über die neuen Medien keine flächendeckende und lückenlose Benachrichtigung der Bevölkerung mehr gewährleistet werden kann. Gerade die Ereignisse am 11.09.2001 in den USA zeigen jedoch, daß eine lückenlose Erfassung eines Teiles der Bevölkerung in einer betroffenen Region überlebenswichtig sein kann. Sollte tatsächlich durch einen Unfall oder einen verbrecherischen Akt die Bevölkerung beispielsweise durch eine sich ausbreitende Wolke von Giftgas bedroht sein, muß ein System zur Verfügung stehen, mit dem die Betroffenen gewarnt und informiert werden können.

Derartige Katastrophen führen außerdem zu dem Problem, daß über die Medien informierte Personen sich zunächst der Kommunikationsnetze bedienen, um ihrerseits gezielt Informationen einzuholen. So greift eine betroffene Person sofort zum Telephon, um Hilfe herbeizuholen, um Angehörige zu informieren oder um weitere Information zu erhalten. Unter dieser plötzlich auftretenden Flut von Anrufen brechen spezielle Kommunikationswege, insbesondere zu den Hilfsorganen, oder sogar das gesamte Netz zusammen, was die Katastrophe noch weiter verstärkt. In unserer Kommunikations-Gesellschaft bricht dann die Organisation zusammen und das Chaos aus.

Aufgabe der Erfindung ist es daher, ein Verfahren zur flächendeckenden Verbreitung von Informationen unter Teilen der Bevölkerung zu schaffen, das sich mit einfachen Mitteln umsetzen und automatisieren läßt, zuverlässig arbeitet und eine möglichst lückenlose Aufklärung gewährleistet. Zudem sollte das Verfahren zu einer Schonung der zur Verfügung stehenden Netzressourcen beitragen, um einen Zusammenbruch zu vermeiden. Es ist auch Aufgabe der Erfindung ein System zur Umsetzung des Verfahrens zu schaffen.

Diese Aufgaben werden durch das Verfahren nach Anspruch 1 13 gelöst.

Der erfinderische Grundgedanke liegt darin, die Anschlüsse der betroffenen Personen, also beispielsweise sämtliche Anschlüsse eines lokal abgegrenzten Gebietes, die normalerweise beliebig an der Kommunikation über das Netz teilhaben können, über einen zentralen Server zu organisieren. Diese Gruppe von Anschlüssen wird sozusagen aus dem normalen Verkehr herausgenommen und separat vom Server organisiert. Dabei kann es sich um Festnetztelephon-, Mobiltelephon-, Fax- oder Computeranschlüsse handeln. Entsprechend gilt das Internet auch als Telekommunikationsnetz. Somit wird also im Ausnahmefall eine Gruppe von Anschlüssen insbesondere über deren bekannte Netzkennung definiert und sowohl für eingehende als auch für ausgehende Anrufe blockiert. Diese Blockierung läßt sich bildlich so beschreiben, daß diesen Anschlüssen der Server vorgeschaltet wird. Jede diese Anschlüsse betreffende Leitung wird also über den Server umgeleitet. Ein direkter "unkontrollierter" Zugang ist nicht mehr möglich. Erfindungsgemäß organisiert nun der Server alle Anrufe, die diesen Anschlüssen zuzuordnen sind, von zentraler Stelle. Die Bevölkerung kann mittels der Erfindung selektiv und effizient gewarnt werden.

Die Erfindung kann realisiert werden durch ein System, aufweisend einerseits ein Telekommunikationsnetz mit einer Vielzahl über Anschlüsse damit verbundener Endgeräte und aufweisend einen Server zur Organisation über das Netz geführter Anrufe, wobei ein auf dem Server realisiertes Notfallmodul bei Vorliegen einer Ausnahmesituation eine Gruppe von Anschlüssen definiert und die direkte Verbindung zu diesen Anschlüssen blockiert, wobei das Modul als Vermittler in die den Anschlüssen zugeordneten Verbindungen eingeschaltet ist und so eine Pufferfunktion hat. Der Server fängt die gesamten Anrufe betreffend die Gruppe ab und harmonisiert das Zustandekommen der Verbindungen. Der besondere Vorteil der Erfindung liegt darin, daß die zur Realisierung benötigten Komponenten in modernen Kommunikationsnetzen existieren und sofort eingesetzt werden können. Es sind somit keine weiteren Kosten für Hardwarekomponenten aufzubringen.

Ein großer Vorteil liegt also zunächst darin, daß organisiert sämtliche Einwohner eines Bezirkes oder einer Region gezielt mit Information versorgt werden können. Der Server kann nach und nach sämtliche Kennungen anwählen, um sich mit den Bewohnern in Verbindung zu setzen. Im Ausnahmefall wird somit vom Server eine Nachricht zur Aufklärung der Bevölkerung entweder an einen Teil der oder an alle Anschlüsse der ausgewählten Gruppe über je ein Endgerät ausgegeben. Dabei kann die Information mittels gesprochenem oder geschriebenen Text verbreitet werden. Die Strategie der kontrollierten gezielten Information bedingt dabei einen wesentlichen Vorteil: So kann der Server durch kontrollierte Schaltung der Leitungen verhindern, daß das Netz überlastet wird und zusammenbricht, bevor jeder Teilnehmer erreicht wurde. Die gezielte Verbreitung der Information und die Unterbindung ausgehender Anrufe trägt dazu bei, eine unkontrollierbare Reaktion der Bevölkerung und damit ein Chaos zu vermeiden. Selbstverständlich ist es auch denkbar mehrere Server "dezentral" an das Netz anzuschließen, wobei jeder der Rechner für sich zu der erfindungsgemäßen Organisation fähig ist.

Zur Erledigung seiner Arbeit bedient sich der Server vorteilhafter Weise eines Stapelverarbeitungsprogrammes (Batch-Programm) das die Übermittlung der Nachrichten organisiert, wobei dieses Programm die Liste der darin abgelegten und anzuwählenden Kennungen durch Anwahl abarbeitet und die Sprach- oder Textnachricht jeweils automatisch übermittelt. Dieses Batch-Programm kann von einer Einsatzzentrale konfektioniert werden, indem eine Liste mit den Kennungen der relevanten Anschlüssen generiert wird. Es lassen sich auch mehrere solcher Batch-Programme von einem Server gleichzeitig abarbeiten.

Besonders vorteilhaft ist es, wenn der Server registriert, ob die Information tatsächlich von einem Endgerät empfangen wurde. Die Registrierung kann automatisch erfolgen, indem der Server das Abheben des Telephons und damit das Zustandekommen der Leitung bemerkt. Es ist auch möglich, den anderen Gesprächspartner namentlich anzusprechen und von ihm eine Quittierung des Anrufes z.B. durch Sprachverifikation oder durch Rückruf zu erbitten. Schließlich ist in der Gefahrensituation das Erreichen jeder einzelnen Person wichtig. Im Fall des vergeblichen Anrufes wird der Server eventuell auch über ein anderes Medium weiterere Versuche unternehmen, eine Verbindung aufzubauen.

Neben dieser Möglichkeit, eine Gruppe von Personen gezielt mit Information zu versorgen, hat die Erfindung den weiteren Vorteil, daß es auch möglich wird, von Außen an die Gruppe gerichtete Anrufe aufzunehmen und weiterzuverarbeiten. Der Server hat dann die Rolle einer zentralen und "intelligenten" Mobilbox. Jeder der besorgten Anrufer kann seine Nachricht weitergeben und muß nicht mit dem Besetzt-Zeichen konfrontiert werden. In einer besonders einfachen Version wird der Anrufer durch eine Textansage darüber informiert, daß eine Durchstellung des Anrufes derzeit wegen einer Überlastung nicht möglich ist. Dieser Ansage kann die Information angehängt werden, wann mit einer Durchstellung gerechnet werden kann. Für den Anrufer ist es besonders angenehm und daher vorteilhaft, wenn er die Möglichkeit erhält, dem gewünschten Gesprächspartner eine Mitteilung zu hinterlassen. Der Server wird dann diese Mitteilung registrieren und zu gegebener Zeit automatisch an den gewünschten Gesprächspartner weiterleiten. Natürlich stehen die beschriebenen Möglichkeiten nicht nur dem externen Anrufer zur Verfügung. Auch dem nach Außen anrufende Mitglied der betroffenen Gruppe wird die Option eröffnet, informiert zu werden und mit den Außenstehenden über die "Mailbox" in Kontakt zu treten.

Es ist auch vorteilhaft, wenn der Server das Gespräch mittels eines Sprach-Modules annehmen kann und dem Gesprächspartner die Möglichkeit gibt, durch Eingabe von Worten sich innerhalb eines Menüs zu bewegen. So können einerseits die Anrufe in gewisser Weise, z.B. zu den Hilfsorganisationen, kanalisiert werden und andererseits wird der Anrufer durch den Dialog beruhigt, da er das Gefühl hat, daß etwas geschieht. Über einen solchen Dialog kann dem Anrufer noch weitere Information angeboten werden oder er kann in besonders dringenden Fällen, beispielsweise bei lebensgefährlichen Verletzungen, doch relativ schnell mit einer Rettungsstelle verbunden werden. In diesem Sinne ist es auch vorteilhaft, den Anschlüssen und/oder den ein- oder ausgehenden Anrufen Prioritäten zuzuteilen, um dringende Vermittlungen bei der Abarbeitung zu bevorzugen. So ist es u.U. notwendig, daß die Staatsgewalt oder die Rettungsstellen nicht durch den Server behindert werden. Dabei können die Prioritäten den einzelnen Netzkennungen zugeordnet werden oder entsprechend privilegierte Personen erhalten einen Code, den sie dem auf dem Server realisierten Programm mitteilen. Die Identifikation ist auch mit Sprachverifikation, mit IDNummer oder über digitale Signatur möglich. Die entsprechende Verbindung wird dann bevorzugt hergestellt.

Damit der Server seine moderierende Aufgabe wahrnehmen kann, ist es von Vorteil, ihm die momentane Netzbelastung als Parameter vorzugeben, wobei der Server dann bei der Durchführung der abzuarbeitenden und der aufgelaufenen Anrufe darauf achtet, das Netz nicht über Gebühr zu belasten. So kann ein Zusammenbruch der Kommunikationswege, insbesondere zu den Hilfsorganisationen, und ein Zusammenbruch des gesamten Netzes ausgeschlossen werden.

## Patentansprüche

1. Verfahren zum Betrieb eines Telekommunikationsnetzes im Fall einer zeitweiligen starken Belastung, wobei das Netz über eine Vielzahl von Anschlüssen verfügt, an die Endgeräte anschließbar sind, wobei die Anschlüsse jeweils über individuelle Netzkennungen anwählbar sind und wobei ein zentraler Server zur Organisation der Verbindungen in das Netz eingebunden ist und im Fall einer zeitweiligen starken Belastung eine Gruppe von Anschlüssen definiert wird, daß die Anschlüsse der Gruppe für eingehende und ausgehende Anrufe blockiert werden, **dadurch gekennzeichnet, daß** die zu den Anschlüssen führenden Verbindungen über den Server umgeleitet werden, wobei der Server die diesen Anschlüssen zuzuordnenden Anrufe zentral organisiert und im Fall einer zumindest einen Teil der Bevölkerung betreffenden Gefahrensituation vom Server eine Nachricht zur Aufklärung der Bevölkerung an einen Teil der Anschlüsse oder an alle Anschlüsse der Gruppe über je ein Endgerät ausgegeben wird.

2. Verfahren nach Anspruch 1,
**dadurch gekennzeichnet, daß** der Server zur Übermittlung der Nachrichten sich eines Stapelverarbeitungsprogrammes (Batch-Programm) bedient, das eine Liste der darin abgelegten anzuwählenden Kennungen durch Anwahl abarbeitet und die Sprach- oder Textnachricht jeweils automatisch übermittelt.

3. Verfahren nach Anspruch 1 oder 2,
**dadurch gekennzeichnet, daß** vom Server registriert wird, ob die Information von einem Endgerät empfangen wurde und daß im Fall des vergeblichen Anrufes ein weiterer Versuch unternommenwird.

4. Verfahren nach einem der vorherigen Ansprüche,
**dadurch gekennzeichnet, daß** an die Anschlüsse der Gruppe gerichtete Anrufe vom Server automatisch aufgenommen werden.

5. Verfahren nach Anspruch 4,
**dadurch gekennzeichnet, daß** der Anrufer durch eine Textansage darüber informiert, daß derzeit eine Durchstellung des Anrufes nicht möglich ist.

6. Verfahren nach Anspruch 5,
**dadurch gekennzeichnet, daß** der Anrufer die Möglichkeit erhält, dem gewünschten Gesprächspartner eine Mitteilung zu hinterlassen, wobei der Server diese Mitteilung registriert und automatisch zu gegebener Zeit an den gewünschten Gesprächspartner übermittelt.

7. Verfahren nach einem der vorherigen Ansprüche, **dadurch gekennzeichnet, daß** auf dem Server ein Sprach-Modul realisiert ist, das dem Gesprächspartner die Möglichkeit gibt, durch Eingabe von Worten sich innerhalb eines Menues zu bewegen.

8. Verfahren nach einem der vorherigen Ansprüche, **dadurch gekennzeichnet, daß** dem Server die momentane Netzbelastung als Parameter vorgegeben wird, wobei der Server bei der Durchführung der abzuarbeitenden und der aufgelaufenen Anrufe darauf achtet, das Netz nicht über Gebühr zu belasten.

9. Verfahren nach einem der vorherigen Ansprüche, **dadurch gekennzeichnet, daß** den Anschlüssen und/oder den eingehenden Anrufen Prioritäten zugeteilt werden, um dringende Vermittlungen bei der Abarbeitung zu bevorzugen.

10. Verfahren nach einem der vorherigen Ansprüche,
**dadurch gekennzeichnet, daß** mehrere Server an das Netz angeschlossen sind, die jeder für sich zur Organisation fähig sind.

## Claims

1. Method for operating a telecommunication network in the event of intermittent heavy loading, wherein the network has a multiplicity of ports to which terminals can be connected, wherein the ports are each selectable by means of individual network identifiers and wherein a central server for organizing the connections is incorporated in the network and, in the event of intermittent heavy loading, a group of ports is defined in such a way that the ports in the group are blocked for incoming and outgoing calls, **characterized in that** the connections leading to the ports are rerouted via the server, wherein the server centrally organizes the calls that are to be assigned to these ports, and in the event of a hazard situation relating to at least some of the population, the server outputs a message to enlighten the population to some of the ports or to all ports in the group via a respective terminal.

2. Method according to Claim 1,
**characterized in that** the server transmits the messages by using a stack processing program (batch program) that works through a list of selectable identifiers stored therein by means of selection and transmits the voice or text message automatically in each case.

3. Method according to Claim 1 or 2,
**characterized in that** the server records whether the information has been received by a terminal and **in that** if the call is unsuccessful then a further attempt is made.

4. Method according to one of the preceding claims,
**characterized in that** calls directed to the ports in the group are automatically picked up by the server.

5. Method according to Claim 4,
**characterized in that** the caller uses a text announcement to provide the information that it is currently not possible to put through the call.

6. Method according to Claim 5,
**characterized in that** the caller is provided with the opportunity to leave a message for the desired interlocutor, wherein the server records this message and automatically transmits it to the desired interlocutor at a given time.

7. Method according to one of the preceding claims,
**characterized in that** the server has a voice module implemented on it that provides the interlocutor with the opportunity to move within a menu by inputting words.

8. Method according to one of the preceding claims,
**characterized in that** the current network loading is prescribed for the server as a parameter, wherein the server takes care, when conducting the calls that are to be handled and that have accumulated, to ensure that the network is not loaded excessively.

9. Method according to one of the preceding claims,
**characterized in that** the ports and/or the incoming calls are assigned priorities in order to give preference to urgent communications during handling.

10. Method according to one of the preceding claims,
**characterized in that** multiple servers are connected to the network, each of which are individually capable of organization.

## Revendications

1. Procédé de mise en fonctionnement d'un réseau de télécommunication en cas de forte sollicitation momentanée, dans lequel le réseau est pourvu d'une pluralité de connexions auxquelles peuvent être connectés des terminaux, dans lequel les connexions peuvent respectivement être sélectionnées au moyen d'identificateurs de réseau individuels et dans lequel un serveur central est relié au réseau pour l'organisation des liaisons, et en cas de forte sollicitation momentanée, un groupe de connexions est défini de manière à ce que les connexions du groupe destinées à des appels entrants et sortants soient bloquées, **caractérisé en ce que** les liaisons conduisant aux connexions sont déviées par l'intermédiaire du serveur, dans lequel le serveur organise de manière centralisée les appels à attribuer aux connexions et, en cas de situation de danger concernant au moins une partie de la population, un message d'explication destiné à la population est délivré à une partie des connexions ou à toutes les connexions du groupe par l'intermédiaire de chaque terminal.

2. Procédé selon la revendication 1,
**caractérisé en ce que**, pour transmettre les messages, le serveur se sert d'un programme de traitement par lots (programme par lots) qui traite une liste des identifications à sélectionneur qui y sont stockées en les sélectionnant et transmet automatiquement les messages vocaux ou textuels respectifs.

3. Procédé selon la revendication 1 ou 2,
**caractérisé en ce que** le serveur enregistre le fait de savoir si les informations ont été reçues par un terminal et **en ce qu'**en cas d'échec de l'appel, une essai supplémentaire est effectuée.

4. Procédé selon l'une quelconque des revendications précédentes,
**caractérisé en ce que** les appels destinés aux connexions du groupe sont automatiquement pris en charge par le serveur.

5. Procédé selon la revendication 4,
**caractérisé en ce que** l'appelant est informé au moyen de messages textuels du fait qu'un établissement de l'appel n'est pas possible à l'instant présent.

6. Procédé selon la revendication 5,
**caractérisé en ce que** l'appelant a la possibilité de laisser un message à l'interlocuteur, dans lequel le serveur enregistre ledit message et le transmet automatiquement à un instant déterminé à l'interlocuteur souhaité.

7. Procédé selon l'une quelconque des revendications précédentes,
**caractérisé en ce qu'**un module vocal est réalisé sur le serveur, ledit module vocal offrant la possibilité à l'interlocuteur de se déplacer à l'intérieur d'un menu par saisie de mots.

8. Procédé selon l'une quelconque des revendications précédentes,
**caractérisé en ce que** la sollicitation momentanée du réseau est prédéfinie dans le serveur en tant que paramètre, dans lequel il est fait en sorte, lors de l'établissement des appels à traiter et en cours, que le réseau ne soit pas soumis à une charge excessive.

9. Procédé selon l'une quelconque des revendications précédentes,
**caractérisé en ce que** des priorités sont attribuées aux connexions et/ou aux appels entrants afin de préférer des communications urgentes lors du traitement.

10. Procédé selon l'une quelconque des revendications précédentes,
**caractérisé en ce que** plusieurs serveurs qui sont chacun aptes à organiser les appels sont connectés au réseau.
